# EUROPÄISCHE PATENTSCHRIFT

(11) **EP 1 495 858 B1**
(45) Veröffentlichungstag und Bekanntmachung des Hinweises auf die Patenterteilung: **07.08.2019**
(21) Anmeldenummer: 04015293.6
(22) Anmeldetag: 30.06.2004
(51) Int. Cl.: B32B 3/08, B32B 3/14, B32B 15/08, B64C 1/06, B64C 1/12, B64C 1/00

(54) **LEICHTBAUSTRUKTUR AUS METALLISCHEN SCHICHTWERKSTOFFEN**
LIGHTWEIGHT MATERIAL STRUCTURE MADE OF METAL COMPOSITE MATERIAL
STRUCTURE LÉGÈRE D'UN MATÉRIAU COMPOSITE MÉTALLIQUE

(30) Priorität: 08.07.2003 DE 10330709
(43) Veröffentlichungstag der Anmeldung: 12.01.2005
(73) Patentinhaber: Airbus Operations GmbH, 21129 Hamburg (DE)
(72) Erfinder: Vichniakov, Alexei, 39171 Bahrendorf (DE); Schmidt, Hans-Jürgen, 21614 Buxtehude (DE)
(74) Vertreter: Klöpper, Ute

(56) Entgegenhaltungen:
- EP-A- 1 393 893
- WO-A-92/15453
- WO-A-98/53989
- US-A- 4 411 380
- US-A- 4 500 589
- US-A- 6 114 050

## Beschreibung

Die Erfindung betrifft eine Leichtbaustruktur, bestehend aus einer Außenhaut, die auf der Innenseite durch eine zweidimensionale Versteifung in Form von Stringern und Spanten verstärkt ist, sowie mit zusätzlichen, aus einem schadenstoleranten Werkstoff bestehenden streifenförmigen Elementen, die auf der Innenseite der Außenhaut durch Kleben aufgebracht sind.

Leichtbaustrukturen dieser Art finden beispielsweise im Bereich der Luft- und Raumfahrttechnik und hier insbesondere als Flugzeugrumpf Anwendung. Bei der Auslegung solcher Leichtbauatrukturen wird ein besonderer Wert auf die Gewichtsreduzierung gelegt, wobei die Leichtbaustrukturen jedoch in Abhängigkeit vom jeweiligen Anwendungsfall unterschiedliche Festigkeits-, Ermüdungs- und Schadenstoleranzanforderungen erfüllen müssen. Insbesondere bestehen im Flugzeugbau spezielle Vorgaben hinsichtlich der schadenstoleranten Eigenschaften der dort verwendeten Leichtbaustrukturen.

Die Erhöhung der Schadenstoleranz solcher Leichthaustrukturen kann auf unterschiedliche Weise erfolgen, unter anderem durch eine Erhöhung der Hautdicke bzw. durch die Anpassung der Hautdicke an die örtlichen Belastungsanforderungen. Diese Methoden führen jedoch auch zu einer Erhöhung des Gewichts der Leichtbaustruktur. Eine andere Möglichkeit besteht in der Verwendung von Werkstoffen mit verbesserten schadenstoleranten Eigenschaften, wie z. B. den in der DE 102 38 460 A1 beschriebenen metallischen Schichtwerkstoffen, oder von faserverstärkten Laminaten, wie sie unter dem Warenzeichen GLARE bekannt geworden sind.

Zu den Vorteilen faserverstärkter Laminate zählen neben den sehr guten schadenstoleranten Eigenschaften ihre relativ geringe Dichte im Vergleich zu monolithischen metallischen Werkstoffen. Allerdings besitzen die faserverstärkten Laminate zum gegenwärtigen Zeitpunkt, verglichen mit monolithischen Werkstoffen, teilweise schlechtere statische Festigkeitseigenschaften. Dadurch ist eine Gewichtsreduzierung der Leichtbaustruktur nur in einigen Bereichen erzielbar, die zum großen Teil nach schadenstoleranten Eigenschaften ausgelegt sind. Außerdem ist die Herstellung faserverstärkter Laminate wegen der teilweise komplizierten Klebevorbehandlung dünner Bleche, der Verwendung von zusätzlichen Pre-preg-Folien sowie der Notwendigkeit manueller Positionierung und Vorbereitung für das nachfolgende Kleben vergleichsweise aufwendig. Im Ergebnis können deshalb die Produktionskosten deutlich höher liegen als bei der Verwendung monolithischer Bleche oder von metallischen Schichtwerkstoffen ohne Faserverstärkung, wie sie in der DE 102 38 460 A1 beschrieben sind.

Daneben ist in der WO 98/53989 A1 eine Leichtbaustruktur der eingangs genannten Art beschrieben, die aus miteinander verklebten Metallschichten besteht. In Verbesserung des bereits aus der US 5,429,326 bekannten Spleißkonzeptes zur Verbindung von einzelnen Laminat-Verbundplatten zu einem Bauteil wird in dieser Druckschrift die Anbringung von sogenannten Dopplern durch Klebung an der Außenhaut vorgeschlagen.

Aufgabe der Erfindung ist es, eine derartige Leichtbaustruktur so auszubilden, daß sie eine deutlich verbesserte Schadenstoleranz, insbesondere in Bezug auf das Ermüdungsrißverhalten, aufweist.

Die Erfindung löst diese Aufgabe, indem sie vorsieht, daß die zusätzlichen Elemente zwischen je zwei Stringern angeordnet sind und aus einem Verbundwerkstoff oder einen laminierten Schichtwerkstoff bestehen sowie mit Fasern Verstarkt sind, die eine Länge von wenigstens etwa 5 mm aufweisen. Vorteilhafte Weiterbildungen der Erfindung sind in den weiteren Ansprüchen angegeben. Bei der erfindungsgemäß vorgesehenen Verwendung solcher zusätzlicher auf das Hautblech aufgeklebter streifenförmiger Verstärkungselemente aus einem schadenstoleranten Werkstoff zwischen je zwei Stringern wird die angestrebte Erhöhung der schadenstoleranten Eigenschaften von Leichtbaustrukturen dadurch erreicht, daß bei der Ausbreitung eines Ermüdungsrisses im Bereich der Außenhaut diese zusätzlich angebrachte Fachwerkstruktur über einen deutlich längeren Zeitraum der Rißausbreitung intakt bleibt, wodurch die Rißausbreitungsgeschwindigkeit wesentlich verlangsamt wird.

Dabei hat sich gezeigt, daß die erfindungsgemäß vorgesehene Verwendung solcher zusätzlich lokal aufgebrachter Versteifungen zu einer signifikanten Verbesserung der schadenstoleranten Eigenschaften durch eine Verlangsamung des Rißwachstums sowohl bei monolithischen als auch bei schichtförmig aufgebauten Werkstoffen führt. So hat sich gezeigt, daß sich bei über einen längeren Zeitraum intakt bleibenden Mittelstreifen in Form zusätzlicher Doppler zwischen zwei Stringern das Rißwachstum in der Außenhaut derart verlangsamt, daß eine um bis zu dem Faktor fünf höhere Lebensdauer der Leichtbaustruktur zu erzielen ist. Bei der Ausbreitung von Ermüdungsrissen, die länger als der Abstand zweier benachbarter Stringer sind, zeigt dabei die erfindungsgemäße Leichtbaustruktur im Vergleich zu einer Leichtbaustruktur mit einer Außenhaut aus monolithischem Blech bessere schadenstolerante Eigenschaften, während bei Rißlängen bis zum doppelten Stringerabstand das Rißwachstum in diesen Schichtwerkstoffen höher ist als in konventionell aufgebauten Leichtbaustrukturen mit einem Hautblech aus einem monolithischen Werkstoff.

Die Vorteile der Erfindung resultieren aus der Möglichkeit einer Reduzierung des Gewichtes von Leichtbaustrukturen, insbesondere von Flugzeugschalen, mit hohen schadenstoleranten Anforderungen. Im Flugzeugrumpf sind diese Anforderungen vor allem in der Oberschale von besonderer Bedeutung. Durch die erfindungsgemäß vorgesehene Anordnung der zusätzlichen, aus einem schadenstoleranten Werkstoff bestehenden Elemente, die eine verstärkungsstruktur bilden, ist die Möglichkeit gegeben, deutlich, d.h. um bis zu 20 %, geringere Blechdicken zu verwenden und dadurch das Gesamtgewicht der Leichtbaustruktur signifikant zu verringern.

Nachfolgend soll die Erfindung anhand von in der Zeichnung dargestellten Ausführungsbeispielen näher erläutert werden. Es zeigen
- Fig. 1 - 4: schematische Darstellungen von verstärkten Leichtbaustrukturen und
- Fig. 5: eine Darstellung des Rißwachstums in einer Außenhaut aus einem momolithischen und einem metallischen Schichtwerkstoff jeweils mit einer zusätzlich angebrachten Fachwerkstruktur aus einem schadenstoleranten Werkstoff.

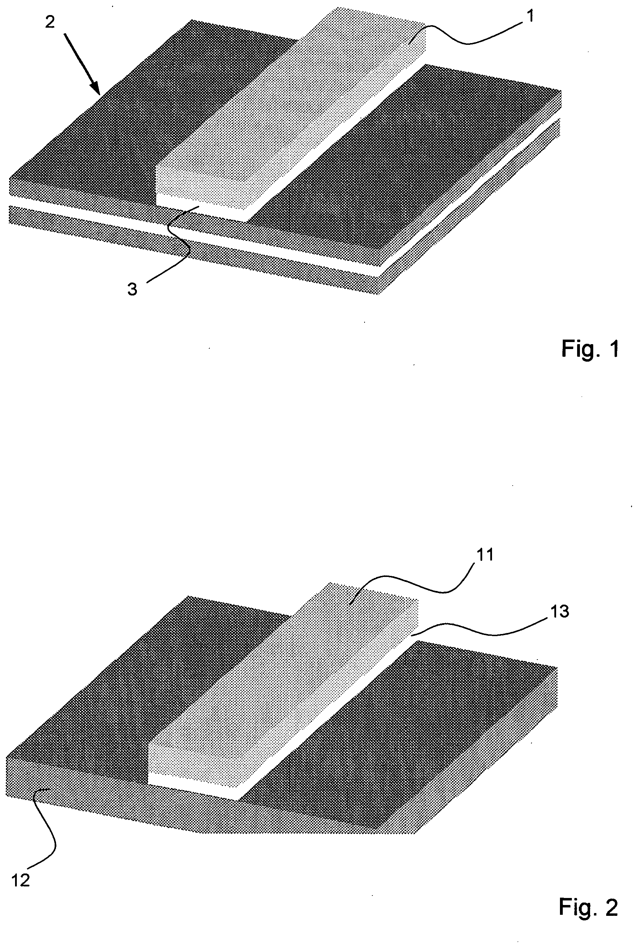

In den Figuren 1 bis 4 sind unterschiedliche Ausführungsformen einer Leichtbaustruktur dargestellt, wobei in allen Fällen auf einem Hautblech eine aus einem schadenstoleranten Werkstoff bestehende Fachwerkstruktur mittels Kleben aufgebracht ist. Diese Fachwerkstruktur hat die Aufgabe, die schadenstoleranten Eigenschaften der gesamten Struktur zu erhöhen und dadurch eine Rißausbreitung im Hautblech zu verzögern.

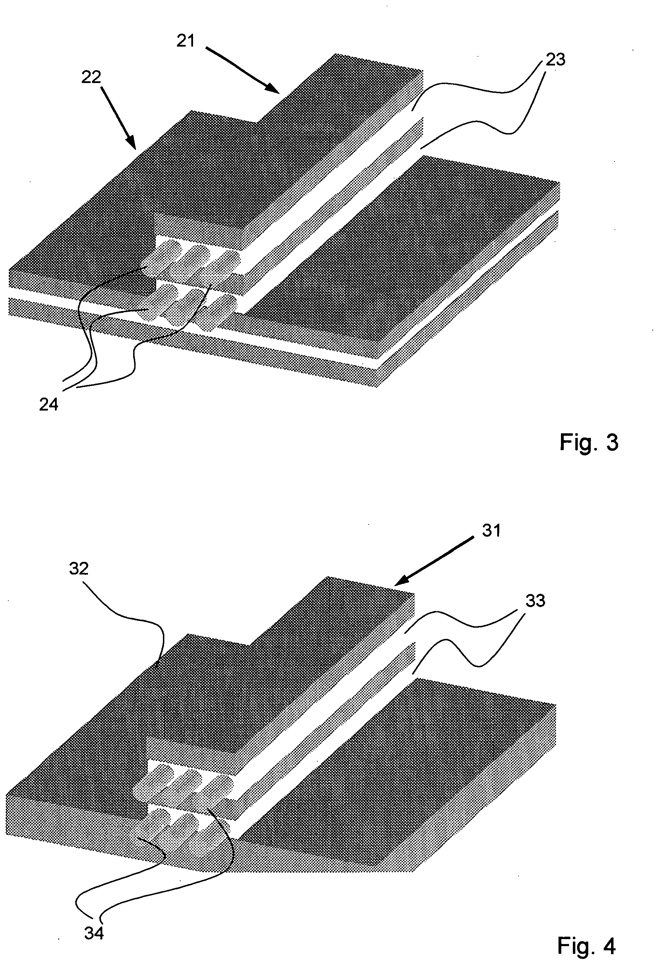

Fig. 1 zeigt eine aus einem schadenstoleranten Werkstoff bestehende Fachwerkstruktur 1, die mittels einer Kleberschicht 3 auf ein Hautblech 2 aufgebracht ist, das aus einem laminierten Werkstoff besteht. Fig. 2 zeigt einen analogen Aufbau einer Leichtbaustruktur, bei der eine ebenfalls aus einem schadenstoleranten Werkstoff bestehende Fachwerkstruktur 11 mittels eines Klebers 13 auf einem Hautblech 12 aus einem monolithischen Werkstoff angeordnet ist. Die Figuren 3 und 4 zeigen im Prinzip gleichartige Verstärkungsstrukturen, bei denen jeweils eine aus einem laminierten Schichtwerkstoff bestehende Fachwerkstruktur 21 bzw. 31 auf einem Hautblech 22 aus einem laminierten Werkstoff bzw. auf einem Hautblech 32 aus einem monolithischen Werkstoff angeordnet ist.

In allen Fällen bestehen die Fachwerkstrukturen 1, 11, 21, 31 aus Streifen, deren Breite zwischen etwa 10 und 80 mm variiert. Die die Fachwerkstruktur bildenden Elemente 1, 11 können dabei, wie in den Figuren 1 und 2 gezeigt, aus einem monolithischen Werkstoff, insbesondere einer Aluminium-Lithium-Legierung mit vorzugsweise zwischen etwa einem und drei Prozent Lithium, oder aber aus einem Verbundwerkstoff bestehen. In letzterem Fall sind in einer Matrix aus einer Aluminium-, Magnesium oder Titanlegierung Fasern aus Kohlenstoff, polyaromatischem Amid, Aluminiumoxid, Siliziumcarbid oder Basalt als Verstärkungsmaterial eingebettet.

Wie in den Figuren 3 und 4 dargestellt, können die die Fachwerkstruktur bildenden Elemente 21, 31 aber auch aus einem laminierten Schichtwerkstoff bestehen, bei dem einzelne Lagen aus Aluminium-, Magnesium oder Titanblechen durch dazwischen angeordnete Lagen 23, 33 aus in Kunststoff, vorzugsweise einem Epoxydharz, eingebetteten Glas-, Kohlenstoff-, polyaromatischen Amid-, Aluminiumoxid-, Siliziumcarbid- oder Basaltfasern verstärkt sind. Diese Verstärkungsfasern 24, 34 weisen eine Länge von wenigstens etwa 5 mm auf und besitzen eine Fließgrenze von wenigstens 500 MPa. Als Hautbleche kommen sowohl monolithische Bleche aus Aluminium-, Magnesium- oder Titanlegierungen als auch laminierte Werkstoffe aus zwei oder mehr zusammengeklebten und gegebenenfalls mit Zwischenlagen aus Folie versehenen Blechen in Betracht. In einer Leichtbaustruktur können dabei auch mehrere zusätzliche Schichten und Fachwerkstrukturen verwendet werden.

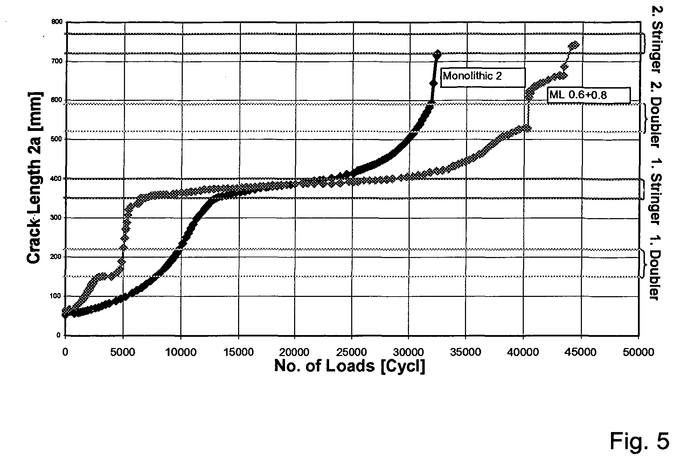

Fig. 5 zeigt abschließend die mit dem vorangehend beschriebenen Aufbau erzielbare deutliche Erhöhung der schadenstoleranten Eigenschaften einer solchen Leichtbaustruktur. Die auf einem Hautblech aus monolithischen bzw. laminierten Werkstoff aufgeklebten, eine Fachwerkstruktur bildenden Verstärkungselemente, am linken Rand der Figur als 1. bzw. 2. Doubler bezeichnet, verzögern jeweils die Rißausbreitung eines Ermüdungsrisses in der Außenhaut und verhindern so ein frühzeitiges Versagen der Struktur.

## Patentansprüche

1. Leichtbaustruktur, bestehend aus einer Aussenhaut (2, 12, 22, 32), die auf der Innenseite durch eine zweidimensionale Versteifung in Form von Stringern und Spanten verstärkt ist, sowie mit zusätzlichen, aus einem schadenstoleranten Werkstoff bestehenden streifenförmigen Elementen (1, 11, 21, 31) die auf der Innenseite der Aussenhaut (2, 12, 22, 32) durch Kleben aufgebracht sind, **dadurch gekennzeichnet dass** die zusätzlichen Elemente (1, 11, 21, 31) zwischen je zwei Stringern angeordnet sind und aus einem Verbundwerkstoff oder einem laminierten Schichtwerkstoff bestehen sowie mit Fasern verstärkt sind, die eine Länge von wenigstens etwa 5 mm aufweisen.

2. Leichtbaustruktur gemäss Anspruch 1, **dadurch gekennzeichnet, dass** die zusätzlichen Elemente (1, 11, 21, 31) eine Fachwerkstruktur bilden.

3. Leichtbaustruktur gemäss Anspruch 1, **dadurch gekennzeichnet, dass** die zusätzlichen Elemente (1, 11) aus einer mit Kohlenstoff-, polyaromatischen Amid-, Aluminiumoxid-, Siliziumcarbid- oder Basaltfasern verstärkten Matrix aus einer Aluminiumlegierung bestehen.

4. Leichtbaustruktur gemäss Anspruch 1, **dadurch gekennzeichnet, dass** die zusätzlichen Elemente (1, 11) aus einer mit Kohlenstoff-, polyaromatischen Amid-, Aluminiumoxid-, Siliziumcarbid- oder Basaltfasern verstärkten Matrix aus einer Magnesiumlegierung bestehen.

5. Leichtbaustruktur gemäss Anspruch 1, **dadurch gekennzeichnet, dass** die zusätzlichen Elemente (1,11) aus einer mit Kohlenstoff-, polyaromatischen Amid-, Aluminiumoxid-, Siliziumcarbid- oder Basaltfasern verstärkten Matrix aus einer Titanlegierung bestehen.

6. Leichtbaustruktur gemäss Anspruch 1 oder 2, **dadurch gekennzeichnet, dass** die zusätzlichen Elemente (21, 31) aus Aluminiumblechen bestehen, die mit in Kunststoff eingebetteten Glas-, Kohlenstoff-, polyaromatischen Amid-, Aluminiumoxid-, Siliziumcarbid- oder Basaltfasern verstärkt sind.

7. Leichtbaustruktur gemäss Anspruch 1 oder 2, **dadurch gekennzeichnet, dass** die zusätzlichen Elemente (21, 31) aus Magnesiumblechen bestehen, die mit in Kunststoff eingebetteten Glas-, Kohlenstoff-, polyaromatischen Amid-, Aluminiumoxid-, Siliziumcarbid- oder Basaltfasern verstärkt sind.

8. Leichtbaustruktur gemäss Anspruch 1 oder 2, **dadurch gekennzeichnet, dass** die zusätzlichen Elemente (21, 31) aus Titanblechen bestehen, die mit in Kunststoff eingebetteten Glas-, Kohlenstoff-, polyaromatischen Amid-, Aluminiumoxid-, Siliziumcarbid- oder Basaltfasern verstärkt sind.

9. Leichtbaustruktur gemäss einem der Ansprüche 1 bis 8, **dadurch gekennzeichnet, dass** die Fasern (24, 34) eine Fliessgrenze von wenigstens 500 MPa aufweisen.

10. Leichtbaustruktur gemäss einem der Ansprüche 1 bis 9, **dadurch gekennzeichnet, dass** der Kunststoff aus einem Epoxydharz besteht.

11. Leichtbaustruktur gemäss einem der Ansprüche 1 bis 10, **dadurch gekennzeichnet, dass** die Aussenhaut (2, 12, 22, 32) aus einem monolithischen Blech besteht.

12. Leichtbaustruktur gemäss Anspruch 11, **dadurch gekennzeichnet, dass** die Aussenhaut (2, 12, 22, 32) aus einer Aluminiumlegierung besteht.

13. Leichtbaustruktur gemäss Anspruch 11, **dadurch gekennzeichnet, dass** die Aussenhaut (2, 12, 22, 32) aus einer Magnesiumlegierung besteht.

14. Leichtbaustruktur gemäss Anspruch 11, **dadurch gekennzeichnet, dass** die Aussenhaut (2, 12, 22, 32) aus einer Titanlegierung besteht

15. Leichtbaustruktur gemäss einem der Ansprüche 1 bis 10, **dadurch gekennzeichnet, dass** die Aussenhaut (2, 12, 22, 32) aus einem laminierten Werkstoff besteht.

16. Leichtbaustruktur gemäss einem der Ansprüche 1 bis 15, **dadurch gekennzeichnet, dass** die Aussenhaut (2, 12, 22, 32) eine Dicke zwischen etwa 0.5 und 2 mm aufweist.

## Claims

1. Lightweight structure consisting of an outer skin (2, 12, 22, 32) which is reinforced on the inside by two-dimensional stiffening in the form of stringers and formers and also by additional strip-shaped elements (1, 11, 21, 31) which consist of a damage-tolerant material and are attached to the inside of the outer skin (2, 12, 22, 32) by adhesive bonding, **characterized in that** the additional elements (1, 11, 21, 31) are arranged between each two stringers and consist of a composite material or a laminated material and are reinforced with fibres which have a length of at least about 5 mm.

2. Lightweight structure according to Claim 1, **characterized in that** the additional elements (1, 11, 21, 31) form a framework structure.

3. Lightweight structure according to Claim 1, **characterized in that** the additional elements (1, 11) consist of a matrix which is composed of an aluminium alloy and is reinforced with carbon fibres, polyaromatic amide fibres, aluminium oxide fibres, silicon carbide fibres or basalt fibres.

4. Lightweight structure according to Claim 1, **characterized in that** the additional elements (1, 11) consist of a matrix which is composed of a magnesium alloy and is reinforced with carbon fibres, polyaromatic amide fibres, aluminium oxide fibres, silicon carbide fibres or basalt fibres.

5. Lightweight structure according to Claim 1, **characterized in that** the additional elements (1, 11) consist of a matrix which is composed of a titanium alloy and is reinforced with carbon fibres, polyaromatic amide fibres, aluminium oxide fibres, silicon carbide fibres or basalt fibres.

6. Lightweight structure according to Claim 1 or 2, **characterized in that** the additional elements (21, 31) consist of aluminium sheets which are reinforced with glass fibres, carbon fibres, polyaromatic amide fibres, aluminium oxide fibres, silicon carbide fibres or basalt fibres embedded in polymer.

7. Lightweight structure according to Claim 1 or 2, **characterized in that** the additional elements (21, 31) consist of magnesium sheets which are reinforced with glass fibres, carbon fibres, polyaromatic amide fibres, aluminium oxide fibres, silicon carbide fibres or basalt fibres embedded in polymer.

8. Lightweight structure according to Claim 1 or 2, **characterized in that** the additional elements (21, 31) consist of titanium sheets which are reinforced with glass fibres, carbon fibres, polyaromatic amide fibres, aluminium oxide fibres, silicon carbide fibres or basalt fibres embedded in polymer.

9. Lightweight structure according to any of Claims 1 to 8, **characterized in that** the fibres (24, 34) have a yield point of at least 500 MPa.

10. Lightweight structure according to any of Claims 1 to 9, **characterized in that** the polymer consists of an epoxy resin.

11. Lightweight structure according to any of Claims 1 to 10, **characterized in that** the outer skin (2, 12, 22, 32) consists of a monolithic metal sheet.

12. Lightweight structure according to Claim 11, **characterized in that** the outer skin (2, 12, 22, 32) consists of an aluminium alloy.

13. Lightweight structure according to Claim 11, **characterized in that** the outer skin (2, 12, 22, 32) consists of a magnesium alloy.

14. Lightweight structure according to Claim 11, **characterized in that** the outer skin (2, 12, 22, 32) consists of a titanium alloy.

15. Lightweight structure according to any of Claims 1 to 10, **characterized in that** the outer skin (2, 12, 22, 32) consists of a laminated material.

16. Lightweight structure according to any of Claims 1 to 15, **characterized in that** the outer skin (2, 12, 22, 32) has a thickness in the range from about 0.5 to 2 mm.

## Revendications

1. Structure de construction légère, constituée par une peau externe (2, 12, 22, 32), qui est renforcée sur la face interne par un renforcement bidimensionnel sous forme de longerons et de membrures, et présentant des éléments supplémentaires en forme de bande (1, 11, 21, 31) constitués par un matériau tolérant à la détérioration qui sont appliqués par collage sur la face interne de la peau externe (2, 12, 22, 32), **caractérisée en ce que** les éléments supplémentaires (1, 11, 21, 31) sont disposés entre à chaque fois deux longerons et sont constitués par un matériau composite ou par un matériau stratifié laminé et renforcés par des fibres, qui présentent une longueur d'au moins environ 5 mm.

2. Structure de construction légère selon la revendication 1, **caractérisée en ce que** les éléments supplémentaires (1, 11, 21, 31) forment une structure d'ossature.

3. Structure de construction légère selon la revendication 1, **caractérisée en ce que** les éléments supplémentaires (1, 11) sont constitués par une matrice en un alliage d'aluminium, renforcée par des fibres de carbone, polyaromatiques à base d'amide, d'oxyde d'aluminium, de carbure de silicium ou de basalte.

4. Structure de construction légère selon la revendication 1, **caractérisée en ce que** les éléments supplémentaires (1, 11) sont constitués par une matrice en un alliage de magnésium, renforcée par des fibres de carbone, polyaromatiques à base d'amide, d'oxyde d'aluminium, de carbure de silicium ou de basalte.

5. Structure de construction légère selon la revendication 1, **caractérisée en ce que** les éléments supplémentaires (1, 11) sont constitués par une matrice en un alliage de titane, renforcée par des fibres de carbone, polyaromatiques à base d'amide, d'oxyde d'aluminium, de carbure de silicium ou de basalte.

6. Structure de construction légère selon la revendication 1 ou 2, **caractérisée en ce que** les éléments supplémentaires (21, 31) sont constitués par des tôles en aluminium qui sont renforcées par des fibres de verre, de carbone, polyaromatiques à base d'amide, d'oxyde d'aluminium, de carbure de silicium ou de basalte, incorporées dans un matériau synthétique.

7. Structure de construction légère selon la revendication 1 ou 2, **caractérisée en ce que** les éléments supplémentaires (21, 31) sont constitués par des tôles en magnésium, qui sont renforcées par des fibres de verre, de carbone, polyaromatiques à base d'amide, d'oxyde d'aluminium, de carbure de silicium ou de basalte, incorporées dans un matériau synthétique.

8. Structure de construction légère selon la revendication 1 ou 2, **caractérisée en ce que** les éléments supplémentaires (21, 31) sont constitués par des tôles en titane, qui sont renforcées par des fibres de verre, de carbone, polyaromatiques à base d'amide, d'oxyde d'aluminium, de carbure de silicium ou de basalte, incorporées dans un matériau synthétique.

9. Structure de construction légère selon l'une quelconque des revendications 1 à 8, **caractérisée en ce que** les fibres (24, 34) présentent une limite d'écoulement d'au moins 500 MPa.

10. Structure de construction légère selon l'une quelconque des revendications 1 à 9, **caractérisée en ce que** le matériau synthétique est constitué par une résine époxyde.

11. Structure de construction légère selon l'une quelconque des revendications 1 à 10, **caractérisée en ce que** la peau externe (2, 12, 22, 32) est constituée par une tôle monolithique.

12. Structure de construction légère selon la revendication 11, **caractérisée en ce que** la peau externe (2, 12, 22, 32) est constituée par un alliage d'aluminium.

13. Structure de construction légère selon la revendication 11, **caractérisée en ce que** la peau externe (2, 12, 22, 32) est constituée par un alliage de magnésium.

14. Structure de construction légère selon la revendication 11, **caractérisée en ce que** la peau externe (2, 12, 22, 32) est constituée par un alliage de titane.

15. Structure de construction légère selon l'une quelconque des revendications 1 à 10, **caractérisée en ce que** la peau externe (2, 12, 22, 32) est constituée par un matériau laminé.

16. Structure de construction légère selon l'une quelconque des revendications 1 à 15, **caractérisée en ce que** la peau externe (2, 12, 22, 32) présente une épaisseur entre environ 0,5 et 2 mm.
